# EUROPÄISCHE PATENTANMELDUNG

(11) **EP 0 961 004 A2**
(43) Veröffentlichungstag der Anmeldung: **01.12.1999**
(21) Anmeldenummer: 99103265.7
(22) Anmeldetag: 19.02.1999
(51) Int. Cl.: E06B 9/42, E06B 9/66

(54) **Lüftungsvorrichtung zur Anordnung in einem Wandflächenbereich eines Gebäudes**

(30) Priorität: 28.05.1998 DE 29809644 U; 07.09.1998 DE 29815953 U
(71) Anmelder: Arntjen, Gerd, 26180 Rastede (DE)
(72) Erfinder: Arntjen, Gerd, 26180 Rastede (DE)
(74) Vertreter: Lauerwald, Jörg, Dipl.-Phys.

(57) **Zusammenfassung**

Die Erfindung betrifft eine Lüftungsvorrichtung zur Anordnung in einem wandflächenbereich eines Gebäudes.

Derartige Lüftungsvorrichtungen sind für sogenannte Kaltställe marktüblich. Dabei ist eine Außenseite eines Stallgebäudes gegen Windeintritt nur mit einem oder mehreren übereinander angeordneten planenartigen Wandelementen verschlossen, die sich zur weitgehenderen Belüftung des Stalles öffnen lassen, indem das Wandelement nach Art eines Rollos nach oben aufgewickelt wird.

Der Erfindung liegt die Aufgabe zugrunde, eine Lüftungsvorrichtung aufzuzeigen, bei der die Öffnung des Wandelementes durch definiertes bzw. kontrolliertes Herablassen des oberen Randes des Wandelementes bei gleichzeitigem Aufwickeln des Wandelementes und nur mittels eines einzigen Antriebes erfolgt.

Diese Aufgabe wird erfindungsgemäß dadurch gelöst, daß das Wandelement (1) und das Zugorgan (3,5,7,17) zusammen mit weiteren Elementen eine letztlich über das einzige gemeinsame Antriebsorgan (10) mehr oder weniger geschlossene Schleife bilden, wobei vorzugsweise auch das Zugorgan (3,5,7,17) selbst in dem Maße auf der Wickelwelle (9) abgewickelt wird, in dem das Wandelement (1) aufgewickelt wird, oder umgekehrt, und zwar zueinander gegensinnig.

## Beschreibung

Die Erfindung betrifft eine Lüftungsvorrichtung zur Anordnung in einem Wandflächenbereich eines Gebäudes gemäß des Oberbegriffes des Anspruchs 1.

Derartige Lüftungsvorrichtungen sind für sogenannte Kaltställe marktüblich. Dabei ist eine Außenseite eines Stallgebäudes gegen Windeintritt nur mit einem oder mehreren übereinander angeordneten planenartigen Wandelementen verschlossen, die sich zur weitgehenderen Belüftung des Stalles mehr oder weniger weit öffnen lassen, indem der untere Rand eines Wandelementes angehoben, der obere Rand abgesenkt oder das Wandelement nach Art eines Rollos nach oben aufgewickelt wird.

Diese Öffnungsvorgänge können beispielsweise durch elektrische Antriebe thermostatisch gesteuert erfolgen.

Als Wandelemente werden relativ dünne, aber windundurchlässige Folien verwendet, die sehr reißfest, jedoch im Hinblick auf Scheuerbeanspruchung relativ empfindlich sind. Aus diesem Grunde ist es nicht sehr empfehlenswert, ein solchen Wandelement einfach dadurch zu raffen, daß der obere Rand abgesenkt wird oder der untere Rand hochgezogen wird und sich das Wandelement dabei undefiniert zusammenlegt. Das Aufwickeln des Wandelementes ist daher der wünschenswertere Vorgang.

Ein rolloartiges Aufwickeln des Wandelementes nach oben hat jedoch den Nachteil, daß bei wenig geöffnetem Wandelement der Luftzug zunächst im bodennäheren Bereich des Stalles entsteht, so daß eine Erkältungsgefahr für die im Stall untergebrachten Tiere besteht.

Der Erfindung liegt daher die Aufgabe zugrunde, eine Lüftungsvorrichtung der eingangs genannten Gattung aufzuzeigen, bei der die Öffnung des Wandelementes durch definiertes bzw. kontrolliertes Herablassen des oberen Randes des Wandelementes bei gleichzeitigem Aufwickeln des Wandelementes und nur mittels eines einzigen Antriebes erfolgt.

Diese Aufgabe wird erfindungsgemäß durch die kennzeichnenden Merkmale des Anspruchs 1 gelöst.

Vorteilhafte Weiterbildungen ergeben sich aus den Unteransprüchen.

Bei der erfindungsgemäßen Lüftungsvorrichtung bilden das Wandelement und das Zugorgan allein oder zusammen mit weiteren Elementen eine letztlich über das einzige gemeinsame Antriebsorgan mehr oder weniger geschlossene schleife bzw. Schlaufe, wobei vorzugsweise auch das Zugorgan selbst in dem Maße auf der Wickelwelle abgewickelt wird, in dem das Wandelement aufgewickelt wird, oder umgekehrt, und zwar zueinander gegensinnig. Dies hat den Vorteil, daß absolut synchron das Zugorgan dem Wandelement genau soweit nachgibt, wie dies notwendig ist, so daß beim Wickelvorgang mit Öffnungsrichtung nach unten der obere Rand des Wandelementes definiert mit Hilfe eines einzigen Antriebes gehalten bzw. nachgelassen wird.

Die Art des Antriebes kann, wie beim Stand der Technik, manuell, z. B. mit Hilfe von Kurbeln und Gelenkwellen, oder elektrisch oder in sonstiger geeigneter Weise erfolgen, insbesondere auch thermostatisch gesteuert.

Die Abstimmung des Zugorganes und des Wandelementes sind im Hinblick auf den gleichmäßigen Raumbedarf und einen somit ordentlichen Wickelvorgang ohne größere Belastung des Antriebes dann besonders gut gewährleistet, wenn, wie bei einer bevorzugten Weiterbildung der Erfindung vorgesehen, das Zugorgan als Bahnstreifen aus demselben Planmaterial besteht wie das Wandelement selbst. Unabhängig davon ist es aber auch denkbar zur Pufferung eventuell auftretender Belastungskräfte, das Antriebsorgan nachgiebig, z.B. unter Federaufhängung, anzuordnen, oder entsprechend nachgiebige Abschnitte oder Elemente in die Schlaufe aus Zugorgan und Wandelement aufzunehmen.

Das Zugorgan kann unmittelbar an dem Wandelement angesetzt sein oder an einer auf- und abbeweglichen Horizontalstange, von der das Wandelement herunterhängt, angreifen, wobei hier der Begriff 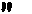 Stange" im weitesten Sinne zu verstehen ist und beispielsweise jegliche Randverstärkung oder - versteifung des oberen Randes des Wandelementes bezeichnen kann.

Eine unmittelbare Befestigung des Zugorganes am Wandelement ist insbesondere dann möglich und von Vorteil, wenn, wie bei einer Weiterbildung der Erfindung vorgesehen, das Zugorgan sich mit seiner eigenen Breite im wesentlichen über die gesamte Breite des Wandelementes erstreckt. Dies ist möglich, wenn das Zugorgan netzartig ausgebildet ist, so daß ein Luftdurchtritt durch das Zugorgan, wenn auch je nach Maschenweite gedrosselt, möglich ist, so daß sich das Wandelement durch das Zugorgan öffnet. Eine gewisse Luftdrosselung ist, je nach vorherrschenden Windverhältnissen durchaus oftmals erwünscht, wobei der Drosselgrad durch den Lochanteil im Zugorgan vorgebbar ist. Zugorgane mit unterschiedlichen Lochanteilen könnten gegeneinander auswechselbar sein, oder das Zugorgan könnte sogar übereinander waagerecht verlaufende Streifen mit unterschiedlichen Lochanteilen aufweisen, so daß der Öffnungsgrad des Wandelementes und der Drosselgrad des Zugorganes in vorteilhafter Weise miteinander korreliert sind.

Das Zugorgan kann nach einer Weiterbildung der Erfindung in zwei Trums geteilt sein, die über einen gemeinsamen Wickelkern miteinander verbunden sind, auf dem sie gegensinnig bzw. gegenläufig auf- und abwickelbar sind. Auch ein solcher Wickelkern kann als eine Art Horizontalstange ausgebildet sein, Sollte sich bei einer solchen Ausbildung der erfindungsgemäßen Vorrichtung das Zugorgan über die Breite des Wandelementes erstrecken, so müßte es beispielsweise im Bereich von ggf, äquidistant angeordneten Drehlagerungen des Wickelkernes durchtrennt und somit in Vertikalstreifen geteilt sein.

Vorzugsweise ist das Zugorgan zum Wandelement seitlich versetzt angeordnet, um die Wickelvorgänge des Wandelementes und des Zugorganes sich nicht gegenseitig behindern zu lassen. Ein solcher seitlicher Versatz ist durch Umlenkrollen wie über einen Wickelkern gleichermaßen möglich.

Eine nächste Weiterbildung der Erfindung, für die auch selbständiger Schutz beansprucht wird, zeichnet sich dadurch aus, daß der obere Rand des Wandelementes unmittelbar oder mittelbar in einer oberen Position fixierbar ist und die Wickelwelle durch eigene Wickelarbeit unter Aufwickelung des Wandelementes und vorzugsweise unter Mitnahme des entsprechend geführten Antriebsorganes anhebbar ist. Dadurch ist das Wandelement (ausnahmsweise) vollständig nach oben aufwickelbar und zu öffnen, um es in eine Ruheposition zu verbringen, in der es beispielsweise vor Witterungseinflüssen und dem Zugriff von Tieren - von Stalltieren oder z.B. Nagern - besser geschützt ist, und zwar wiederum mit demselben einzigen Antrieb.

Eine weitere Weiterbildung der Erfindung für die ebenfalls selbständiger Schutz beansprucht wird, sieht vor, daß die Wickelwelle, der Wickelkern, die Horizontalstange und/oder ein stangen- bzw. rohrartiges Element ähnlicher Funktion als schiene ausgebildet ist, die zueinander etwa diametral angeordnete Schlitzführungen zur formschlüssigen Einführung eines verdickten Randbereiches, eines sogenannten Keders, des planenartigen Wandelementes bzw. des Zugorganes aufweist.

Eine solche 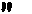 Doppelkederschiene", die eine eigene Weiterentwicklung der erfindungsgemäßen Vorrichtung darstellt, ist für das gleichzeitige Wickeln von Planenelementen, aber auch einfach für deren sichere Verbindung, besonders vorteilhaft und montagefreundlich. Für die Ausbildung eines Keders kann beispielsweise das Planenelement im Randbereich zu einer nur an den Stirnseiten offenen Schlauchform umgeschlagen und mit sich selbst verbunden werden. In die Schlauchform ist dann zu deren Verdickung beispielsweise ein Stab einschiebbar. Die Schlauchform mit dem darin befindlichen Stab kann danach in die im Profil im wesentlichen C-förmige Schlitzführung von der Stirnseite her eingeschoben werden, wobei das Planenelement den über die Länge der Schlitzführung offenen Schlitz durchragt.

Ausführungsbeispiele, aus denen auch weitere erfinderische Merkmale zu entnehmen sind, sind in der Zeichnung schematisch dargestellt. Es zeigen:
- Fig. 1: ein erstes Ausführungsbeispiel einer erfindungegemäßen Lüftungsvorrichtung in einer Frontansicht,
- Fig. 2: das Ausführungsbeispiel gemäß Fig. 1 in einer Seiten- bzw Stirnansicht,
- Fig. 3: ein zweites Ausführungsbeispiel einer erfindungsgemäßen Lüftungsvorrichtung in der Frontansicht,
- Fig. 4: ein drittes Ausführungsbeispiel einer erfindungsgemäßen Lüftungsvorrichtung in der Frontansicht,
- Fig. 5: ein viertes Ausführungsbeispiel einer erfindungsgemäßen Lüftungsvorrichtung in der Frontansicht,
- Fig. 6: das Ausführungsbeispiel gemäß Fig. 5 in einer Seitenansicht,
- Fig. 7: eine Seitenansicht eines Ausführungsbeispiels einer Lüftungsvorrichtung in kompletterer Montierung an einer wenigstens teilweise offenen Stallwand,
- Fig. 8: ein zweites Ausführungsbeispiel einer kompletteren Montierung einer Lüftungsvorrichtung, alternativ zur Fig. 7 und
- Fig. 9: entsprechend der Fig. 1 einer Frontansicht der Lüftungsvorrichtung mit einem einfacheren Zugorgan.

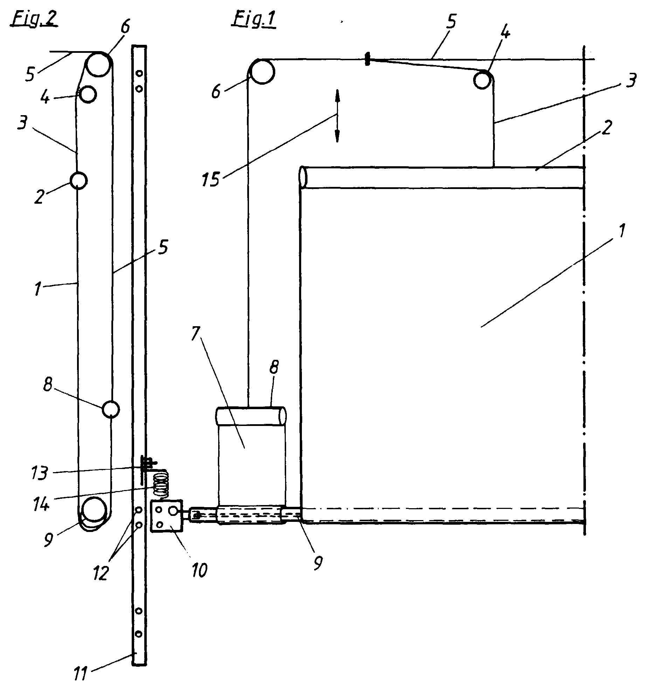

Fig. 1 zeigt in der Frontansicht ein erstes Ausführungsbeispiel einer erfindungsgemäßen Lüftungsvorrichtung, wobei in diesem Ausführungsbeispiel die prinzipielle Betätigbarkeit eines planenartigen Wandelementes 1 zum Öffnen und Schließen der dahinter befindlichen, nicht näher dargestellten Stallwandungsöffnung gezeigt ist.

Das planenartige Wandelement 1 ist über seine gesamte Breite an einer Horizontalstange 2 befestigt, die als Doppelkederschiene ausgebildet ist. Oben an dieser Horizontalstange 2 greift ein Fallseil 3 an, das über eine Umlenkrolle 4 geführt ist und mit einem Hauptseil 5 verbunden ist, das seinerseits umgelenkt ist über eine umlenkrolle 6. Das Hauptseil 5 ist an seinem der Horizontalstange 2 abgewandten Ende mit einer Zugplane 7 verbunden, und zwar vorzugsweise über einen Abschnitt einer zweiten Doppelkederschiene 8. Die Zugplane 7 ist mit ihrem unteren Ende, ebenso wie die als Wandelement 1 fungierende Hauptplane in eine Kederschiene einer unteren Doppelkederschiene 9 eingeschoben. Diese untere Doppelkederschiene ist eine von einem Drehantrieb 10, der beispielsweise mit einem elektrischen Antriebsaggregat oder mit einer mechanischen Handkurbel betätigt werden kann, antreibbare Wickelwelle 9. Dieser Drehantrieb 10 ist auf- und abwärtsbewegbar in einer sogenannten Helmschiene 11 geführt, die im wesentlichen einen C-profilförmigen Querschnitt aufweist, in dem Laufrollen 12 des Drehantriebes 10 laufen können. Mit einer Arretierungseinrichtung 13 ist der Drehantrieb in der in Fig. 1 gezeigten Stellung an der Helmschiene 11 arretierbar oder auch für seine Auf- und Abwärtsbewegung entarretierbar, Gegenüber seiner eigenen Arretierungsvorrichtung 13 ist der Drehantrieb zudem mit einem Federelement 14 gepuffert. Das Gewicht des Drehantriebes und das Gewicht des planenartigen Wandelementes können zur Erleichterung von Hebe- und Absenkvorgängen mit Gegengewichten austariert sein, z.B. am Hauptseil 5.

Die in Fig. 1 dargestellte Lüftungsvorrichtung funktioniert in der folgenden Weise:

Um die hinter dem planenartigen Wandelement 1 befindliche Öffnung in einer nicht näher dargestellten Stallwand zu schließen, ist das planenartige Wandelement von der Wickelwelle 9 abgewickelt. Dies bedeutet, daß die obere Horizontalstange 2, und damit der obere Rand des planenartigen Wandelementes, bis in die höchste Position verbracht ist. Die Beweglichkeit ist mit dem Doppelpfeil 15 angedeutet. Das planenartige Wandelement 1 und die Zugplane 7 sind in entgegengesetzen Richtungen in die Doppelkederschiene der Wickelwelle 9 eingeführt, so daß sie gegensinnig bzw. gegenläufig bei einer Drehung dieser Wickelwelle 9 auf- bzw. abgewickelt werden. Dies bedeutet, daß sich die Zugplane 7 in vollständig aufgewickeltem Zustand auf der Wickelwelle 9 befindet , wenn das planenartige Wandelement 1 vollständig abgewickelt ist. Vorzugsweise bestehen die Zugplane 7 und das planenartige Wandelement 1 aus demselben Folienmaterial, so daß durch dieses Material evtl. auf der Wickelwelle 9 ausgeübte Spannungs- oder Federkräfte sich gegenseitig aufheben. Sollten dennoch Restkräfte letztendlich auf den Drehantrieb 10 wirken, so würden diese mit dem Federelement 14 aufgefangen und gepuffert, um ein Reißen der beteiligten Planen bzw. Zugorgane 1, 3, 5, 7 zu vermeiden.

Soll die hinter dem planenartigen Wandelement 1 befindliche Öffnung wenigstens teilweise geöffnet werden, so geschieht dies durch Aufwickeln des planenartigen Wandelementes 1 um die Wickelwelle 9. Dazu wird in entsprechendem Drehsinn der Drehantrieb 10 betätigt. Damit ein solches Aufwickeln ohne Riß des planenartigen Wandelementes 1 möglich ist, muß in derselben Geschwindigkeit, in der der Drehantrieb 10 das planenartige Wandelement auf der Wickelwelle 9 aufwickelt der obere Rand des planenartigen Wandelementes 1 in Gestalt der oberen Horizontalstange 2 entsprechend und synchron nachgelassen werden. Dies geschieht über das Fallseil 3 und das Hauptseil 5, die letztendlich mit der Zugplane 7 verbunden sind. Diese wird durch dieselbe Drehbewegung des Drehantriebes 10, mit der das planenartige Wandelement 1 aufgewickelt wird, in demselben Maße von derselben Wickelwelle 9 abgewickelt. Diese Vorgänge laufen automatisch völlig synchron ab, und zwar in besonders perfekter Weise, wenn die Zugplane 7 und das planenartige Wandelement 1 aus demselben Folienmaterial ausgebildet sind.

Bei diesem Öffnungsvorgang wird also das planenartige Wandelement nach unten aufgewickelt, so daß von dem planenartigen Wandelement 1 oberhalb der Horizontalstange 2 ein immer größer werdender oberer Luftspalt für die Lüftung geöffnet wird. Dies vermeidet einen unliebsamen Luftzug im bodennahen Bereich des Stalles.

Ein Schließen der Öffnung geht in umgekehrter Reihenfolge vor sich, indem der Drehsinn des Drehantriebes 10 umgekehrt wird, das planenartige Wandelement 1 also abgewickelt wird und gleichzeitig über die obere Horizontalstange 2 und das Fallseil 3, sowie das Hauptseil 5 und die Zugplane 7, die gleichzeitig aufgewickelt wird, der obere Rand des planenartigen Wandelementes im gleichen Maße hochgezogen wird.

Soll einmal ausnahmsweise das Wandelement 1 für eine vollständige, dauerhaftere Öffnung nach oben aufgewickelt werden, so kann der Drehantrieb 10 über die Arretierungsvorrichtung 13 an der Helmschiene 11 entarretiert werden. Durch den Drehvorgang und das Aufwickeln des Wandelementes 1 von unten her, vermag dadurch der Drehantrieb 10 an der Helmschiene 11 hochzuklettern und sich also selbst hochzuziehen. Dafür müssen natürlich außerdem zuvor das Fallseil 3, das Hauptseil 5 oder die obere Horizontalstange 2 in der oberen Position des oberen Randes des Wandelementes 1 arretiert werden. Dies ist mit einfachen Mitteln ohne weiteres möglich. Bei Beendigung des Hochwickelvorganges würde sich also der Drehantrieb 10 im Bereich des oberen Endes der Helmschiene 11 befinden, zusammen mit der Wickelwelle 9, auf der das Wandelement 1 aufgewickelt ist, so daß sich die Wickelwelle 9 dann direkt unterhalb der oberen Horizontalstange 2 in oberer Position befindet, Gleichzeitig würde natürlich wiederum die Zugplane 7 abgewickelt werden und schlaff durchhängend nach unten herabhängen. Dies stört aber weder den Öffnungsvorgang noch den Öffnungsgrad der Öffnung der entsprechenden Stallwand, noch den späteren Schließvorgang.

In der Fig. 2 ist eine Seitenansicht der Lüftungsvorrichtung gemäß Fig. 1 erkennbar. Die Sicht erfolgt auf die Kanten des Wandelementes 1 und der Zugplane 7. Gleiche Bauelemente sind, wie auch in den übrigen nachfolgenden Figuren, mit den gleichen Bezugszahlen bezeichnet wie in Fig. 1.

In der Fig. 2 ist insbesondere erkennbar, daß die obere Horizontalstange 2, der Stangenabschnitt 8 und der Wickelkern 9 jeweils als Doppelkederschienen ausgeführt sind, also jeweils an der Oberseite und an der Unterseite Schienenformen aufweisen, in denen jeweils Keder der beteiligten Elemente, 1,7 eingeschoben werden können. Auf diese Weise ist ein einfache und sichere Verbindung derartiger Elemente möglich, wie auch ein Wickelvorgang um die Wickelwelle 9. Im Bereich der Wickelwelle 9 ist außerdem die gegenläufige Orientierung des Wandelementes 1 und der Zugplane 7 angedeutet. Diese beiden Elemente 1, 7 behindern sich beim Wickelvorgang nicht, da sie versetzt auf der Wickelwelle 9 angeordnet sind, also in der Sicht der Fig. 2 hintereinander.

Seilelemente, wie z.B. das Fallseil 3, können in einer Kederschiene dadurch befestigt werden, daß ein Seilverdickungskopf auf dem Seilende angebracht wird, der formschlüssig in die entsprechende Kederschiene von der Stirnseite her eingeschoben werden kann.

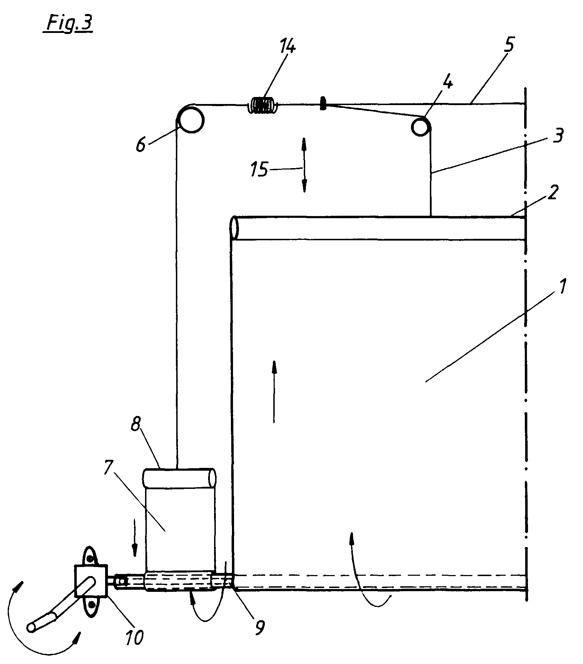

Fig. 3 zeigt ein zweites Ausführungsbeispiel einer erfindungsgemäßen Lüftungsvorrichtung entsprechend der Fig. 1. Die einzigen Unterschiede bestehen zur Fig. 1 darin, daß beim Drehantrieb 10 eine Handkurbel angedeutet ist und daß im Verbindungsbereich zwischen Fallseil 3 und Hauptseil 5 ein federndes Pufferelement 14 angeordnet ist, das nunmehr im Bereich des festmontierten Drehantriebes fehlt. Der Drehantrieb ist auch nicht wie der Drehantrieb in Fig. 1 an einer Helmschiene 11 in lotrechter Richtung verfahrbar.

Die Seitenansicht zur Fig. 3 würde im Prinzip genauso aussehen wie die Seitenansicht gemäß Fig. 2. In diesem Zusammenhang soll an dieser Stelle angesprochen werden, daß das Hauptseil 5, wie in Fig. 2 angedeutet, auch von der Lüftungsvorrichtung weitergeführt sein kann, um beispielsweise nebengeordnete ähnliche Lüftungsvorrichtungen gleichzeitig gekoppelt mit einem einzigen Antrieb zu betätigen.

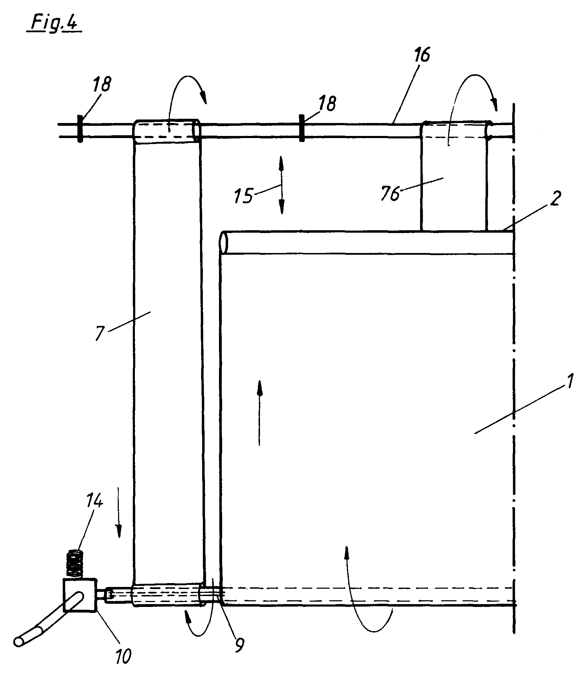

Fig. 4 zeigt ein drittes Ausführungsbeispiel einer erfindungsgemäßen Lüftungsvorrichtung.

Dieses Ausführungsbeispiel unterscheidet sich nachhaltiger von den vorhergehenden Ausführungsbeispielen. Das Fallseil 3 ist nämlich durch einen zweiten Zugplanenabschnitt 7b ersetzt, während der erste Zugplanenabschnitt 7a auch noch das Hauptseil 5 ersetzt. Beide Zugplanentrums 7a und 7b sind statt über ein Seil über einen Wickelkern 16 miteinander verbunden. Über das planenartige Wandelement 1 und das zweite Trum 7b der Zugplane einerseits, sowie über das erste Trum der Zugplane 7a sind die Wickelwelle 9 und der Wickelkern 16 miteinander antriebsmäßig verbunden, so daß mit Hilfe des Drehantriebes 10 im gleichen Sinne nicht nur die Wickelwelle 9 angetrieben wird, sondern auch der obere Wickelkern 16 mitläuft, so daß im Bereich des Wickelkernes 16 die Trums 7a bzw. 7b der Zugplane aufgewickelt bzw. abgewickelt werden und auf diese Weise dem planenartigen Wandelement 1 den notwendigen Wickelspielraum verschaffen. Der Drehantrieb 10 könnte alternativ auch unmittelbar mit dem oberen Wickelkern 16 verbunden sein, so daß die Wickelwelle 9 mitläuft.

Die Seitenansicht zum Ausführungsbeispiel gemäß Fig. 4 würde dennoch im Prinzip ähnlich aussehen wie zu den Figuren 1 und 3, wobei allerdings statt der oberen Umlenkrolle 6 an entsprechender Stelle der Wickelkern 16 als Doppelkederschiene in seiner Stirnansicht zu zeigen wäre.

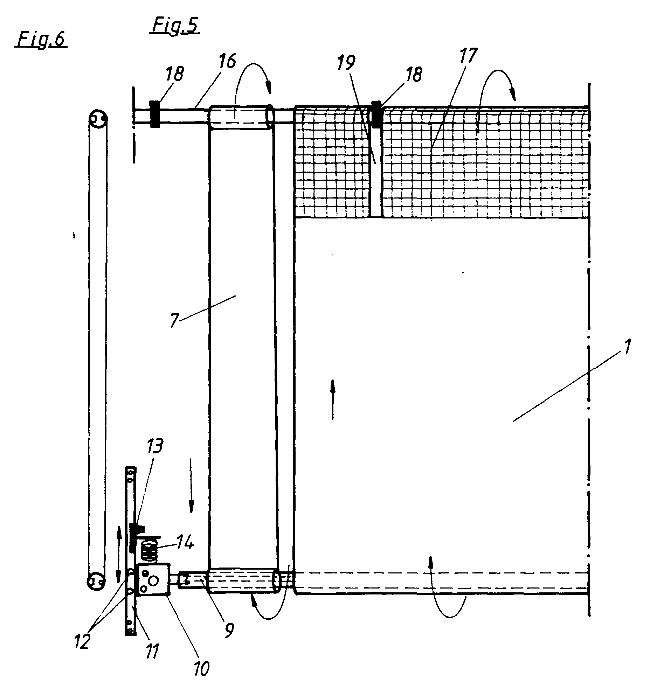

Fig. 5 zeigt ein weiteres Ausführungsbeispiel der erfindungsgemäßen Lüftungsvorrichtung. Dieses unterscheidet sich wiederum von dem Ausführungsbeispiel gemäß Fig. 4. Jetzt ist nämlich das zweite Trum 7b der Zugplane durch eine Netzplane 17 ersetzt, die im Bereich von nach oben offenen U-förmigen Lagern oder von Ringlagern 18 für den drehbaren Wickelkern 16 entlang eines Schlitzes 19 geteilt ist.

Die Netzplane 17 erstreckt sich über die gesamte Breite des planenartigen Wandelementes 1 und erlaubt dennoch eine Öffnung oberhalb des Wandelementes 1, weil sie eben netzartig ausgebildet ist oder sonstige Lüftungsdurchlässe aufweist. Es könnte vorgesehen sein, Horizontalstreifen der Netzplane 17 mit unterschiedlichen Maschenweiten bzw. Lochanteilen vorzusehen, um je nach Öffnungsgrad durch das Wandelement 1 entsprechende Abschnitte der Netzplane 17 in Funktion zu setzen und einen mehr oder weniger gedrosselten Lüftungsdurchtritt zu gewährleisten.

Fig. 6 zeigt die Seitenansicht des Ausführungsbeispiels gemäß Fig. 5, das denkbar einfach aussieht. Das planenartige Wandelement 1 mit der Netzplane 17 einerseits und die Zugplane 7 andererseits bilden in der Seitenansicht scheinbar eine geschlossene Schlaufe, die an dem Wickelkern und dem Wickelkern 16 mit ihren jeweiligen Trums angreift.

In Fig. 5 ist der Drehantrieb 10 wieder an einer Helmschiene 11 mit Arretierungsvorrichtung 13 und Federelement 14 angedeutet.

Alternativ könnte der Drehantrieb 10 in diesem, wie auch in den anderen Ausführungsbeispielen, prinzipiell oben, d.h. im vorliegenden Ausführungsbeispiel an dem dann als Wickelwelle fungierenden Wickelkern 16 angeordnet sein. Es ergibt sich dann der gleiche Bewegungsablauf. Sogar eine 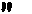 Klettermöglichkeit", also ein Aufwickeln des Wandelementes 1 nach oben ist möglich, wenn die Wickelwelle 9, jetzt Wickelkern, entriegelt würde.

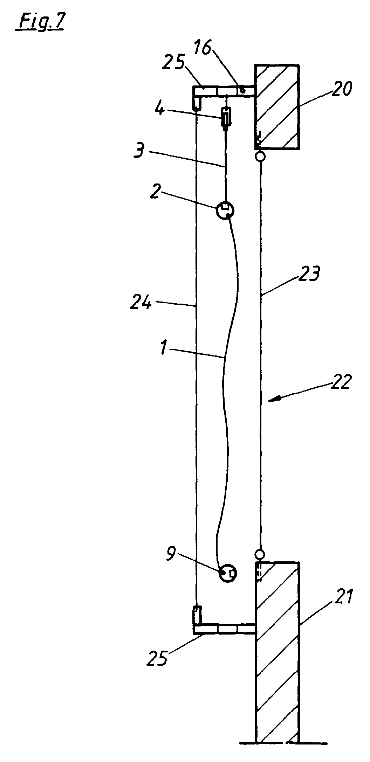

Fig. 7 zeigt in einer Seitenansicht etwa entsprechend den Figuren 2 und 6 eine erfindungsgemäße Lüftungsvorrichtung in kompletterer Montierung. Insbesondere könnte das Ausführungsbeispiel gemäß Fig. 1 von der Darstellung der Fig. 7 umfaßt werden. Gleiche Bauelemente sind wieder mit den gleichen Bezugszahlen bezeichnet, wie in Fig. 1. Im wesentlichen ist angedeutet, daß das planenartige Wandelement über ein Fallseil 3 und eine Horizontalstange 2 abgehängt ist und an einer Wickelwelle 9 ansetzt. Die Horizontalstange 2 ist übrigens in der Darstellung der Fig. 5 entfallen, weil sich die Netzplane 17 über die gesamte Breite des Wandelementes 1 erstreckt und somit die Planen auch über die gesamte Breite unmittelbar miteinander verbunden, z.B. vernäht, sein könnten. Es wäre aber auch in der Fig. 5 eine entsprechende Horizontalstange 2 durchaus verwendbar. Eine solche Horizontalstange 2 würde das Lösen der Planen voneinander erleichtern.

In der Fig. 7 sind außerdem angedeutet, ein oberer Riegel 20 und eine untere Wand 21 eine Wandung eines Stallgebäudes, die eine von dem planenartigen Wandelement 1 zu verschließende Öffnung 22 zwischen sich begrenzen.

Außerdem ist gezeigt, daß der Flatterspielraum des planenartigen Wandelementes 1 zur Stallwand hin und von der Stallwand weg begrenzt ist, und zwar durch Begrenzungsseile oder -stangen 23 bzw. 24. Das Begrenzungsseil 23 kann mit Hilfe von Ringschrauben am Riegel 20 bzw. der Wandung 21 befestigt sein. Das äußere Begrenzungsseil 24 wird in einem Abstand zu diesen Elementen 20, 21 über Halterungen 25 befestigt, wobei von der oberen Halterung 25 auch beispielsweise die Umlenkrolle 4 abgehängt sein kann.

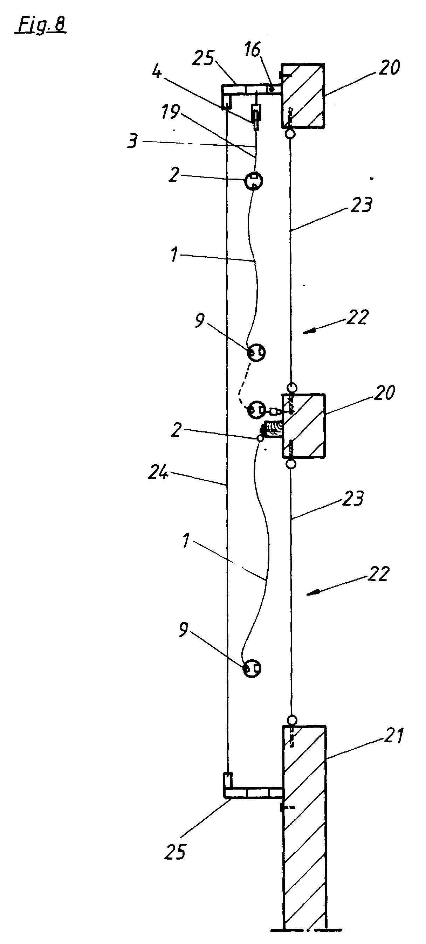

Fig. 8 zeigt ein zweites Ausführungsbeispiel einer kompletteren Montierung gemäß Fig. 7. In dieser Figur ist insbesondere angedeutet, daß sich in der Stallwand auch zwei Öffnungen 22 befinden können, die von einer unteren Wandung 21 und zwei Riegeln 20 begrenzt sind, so daß zwei unabhängig voneinander zu Öffnende bzw. zu schließende planenartige Wandelemente 1 zum verschluß dieser Öffnungen 22 vorgesehen sein können, die übereinander angeordnet sind. Über die Länge eines Stalls gesehen können natürlich auch mehrere planenartige Wandelemente 1, abhängig oder unabhängig voneinander betätigbar, nebeneinander angeordnet sein, gegebenenfalls über ein Hauptseil 5 miteinander gekoppelt.

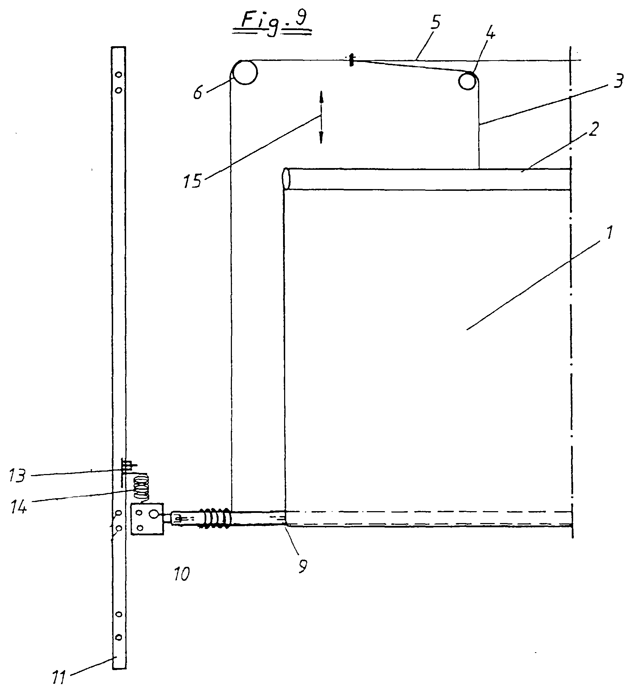

Fig. 9 zeigt eine Frontansicht einer Lüftungsvorrichtung gemäß Fig. 1.

Von dem Ausführungsbeispiel der Fig. 1 unterscheidet sich die Lüftungsvorrichtung nur dadurch, daß das Hauptseil 5 unmittelbar auf der Wickelwelle 9 aufgewickelt ist, die Zugplane 7 also entfällt. Die Fig. 9 zeigt also noch einmal eine besonders einfache Version einer erfindungsgemäßen Lüftungsvorrichtung.

## Patentansprüche

1. Lüftungsvorrichtung zur Anordnung in einem Wandflächenbereich eines im wesentlichen agrarisch zu nutzenden Gebäudes, wie z.B. eines Stallgebäudes, eines Gewächshauses oder dergleichen, die wenigstens ein planenartiges Wandelement umfaßt, welches für eine Durchlüftung durch die Wandfläche mehr oder weniger weiträumig für einen Luftdurchtritt zu öffnen ist,
**dadurch gekennzeichnet**,
daß das Wandelement (1) an einem Zugorgan (3,5,7,17), welches nötigenfalls über ein oberes Umlenkorgan (4) umgelenkt ist, hängt und mit seinem unteren Rand aufwickelbar an einer mittels eines Wickelantriebes (10) antreibbaren Wickelwelle (9) fixiert ist, und daß das Zugorgan (3,5,7,17) mittels desselben einen Wickelantriebes (10) zur Auf- oder Abwicklung des Wandelementes (1) und gleichzeitigen Absenkung oder Anhebung des oberen Randes des Wandelementes (1) synchron betätigbar ist.

2. Lüftungsvorrichtung nach Anspruch 1, dadurch gekennzeichnet daß das Wandelement (1) von einer raheartigen Horizontalstange (2) abgehängt ist.

3. Lüftungsvorrichtung nach Anspruch 2, dadurch gekennzeichnet, daß die Horizontalstange (2) auf- und abbewegbar ist und daß das Zugorgan (3,7,17) an ihr angreift.

4. Lüftungsvorrichtung nach einem oder mehreren der vorhergehenden Ansprüche, dadurch gekennzeichnet, daß das Zugorgan (7) an der Wickelwelle (9) des Wandelementes (1) zur eigenen gegensinnigen Aufwickelung angesetzt ist.

5. Lüftungsvorrichtung nach einem oder mehreren der vorhergehenden Ansprüche, dadurch gekennzeichnet, daß ein oberes Umlenkorgan durch einen stangenartigen Wickelkern (16) ersetzt ist, in dessen Bereich das Zugorgan in zwei Trums (7a,b) geteilt ist, die gegensinnig zur Auf- bzw. Abwicklung an diesem Wickelkern (16) ansetzen.

6. Lüftungsvorrichtung nach einem oder mehreren der vorhergehenden Ansprüche, dadurch gekennzeichnet, daß das Zugorgan (7) bzw. wenigstens sein dem Wandelement (1) ferneres Trum (7a) in Längsrichtung der Wickelwelle (9) seitlich versetzt zum Wandelement (1) angeordnet ist.

7. Lüftungsvorrichtung nach einem oder mehreren der vorhergehenden Ansprüche, dadurch gekennzeichnet, daß das Zugorgan (7) wenigstens abschnittsweise als ein eine gewisse Breite aufweisender Bahnstreifen bzw. Gurt ausgebildet ist.

8. Lüftungsvorrichtung nach Anspruch 7, dadurch gekennzeichnet, daß der Bahnstreifen aus demselben Planenmaterial ausgebildet ist wie das planenartige Wandelement (1).

9. Lüftungsvorrichtung nach Anspruch 7, dadurch gekennzeichnet, daß der Bahnstreifen (17) als Luftdrossel, vorzugsweise aus einem Netzgefüge beliebiger oder in waagerechten Abschnitten unterschiedlicher Struktur oder Maschenweite, ausgebildet ist.

10. Lüftungsvorrichtung nach Anspruch 9, dadurch gekennzeichnet, daß sich der Bahnstreifen (17) in seiner Breite im wesentlichen über die gesamte Breite des Wandelementes (1) erstreckt, nötigenfalls in Vertikalstreifen geteilt.

11. Lüftungsvorrichtung nach Anspruch 10, dadurch gekennzeichnet, daß der Bahnstreifen (17) unmittelbar mit dem oberen Rand des Wandelementes (1) verbunden ist.

12. Lüftungsvorrichtung nach einem oder mehreren der vorhergehenden Ansprüche, dadurch gekennzeichnet, daß der obere Rand des Wandelementes (1) unmittelbar oder mittelbar in einer oberen Position fixierbar ist, und daß die Wickelwelle (9) durch eigene Wickelarbeit anhebbar ist.

13. Lüftungsvorrichtung nach Anspruch 12, dadurch gekennzeichnet, daß der Wickelantrieb (10) mit der Wickelwelle (9) gemeinsam anhebbar ist.

14. Lüftungsvorrichtung nach Anspruch 13, dadurch gekennzeichnet,daß der Wickelantrieb (10) an einer lotrechten Führungsschiene (11) geführt ist.

15. Lüftungsvorrichtung zur Anordnung in einem Wandbereich eines Stallgebäudes, insbesondere nach einem oder mehreren der vorhergehenden Ansprüche, dadurch gekennzeichnet, daß die Wickelwelle (9), der Wickelkern (16), die Horizontalstange (2) und/oder ein stangen- bzw. rohrartiges Element (8) ähnlicher Funktion als Schiene ausgebildet ist, die einander etwa diamatral gegenüberliegende Schlitzführungen zur formschlüssigen Einführung eines verdickten Randbereiches (Keder) des planenartigen Wandelementes (1) bzw. des Zugorganes (3,5,7,17) aufweist.
